# EUROPEAN PATENT APPLICATION

(11) **EP 3 755 039 A1**
(43) Date of publication of application: **23.12.2020**
(21) Application number: 18906190.6
(22) Date of filing: 15.02.2018
(51) Int. Cl.: H04W 24/10, H04W 72/04

(54) **USER TERMINAL AND WIRELESS COMMUNICATION METHOD**

(71) Applicant: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); WANG, Lihui, Beijing 100190 (CN); HOU, Xiaolin, Beijing 100190 (CN)
(74) Representative: Hoffmann Eitle
(86) International application number: PCT/JP2018/005341
(87) International publication number: WO 2019/159296

(57) **Abstract**

A user terminal according to one aspect of the present disclosure includes: a receiving section that receives downlink control information (DCI) for indicating activation or deactivation of semi-persistent channel state information (SP-CSI) reporting; and a control section that determines a configuration of the SP-CSI reporting based on a format of the downlink control information. According to one aspect of the present disclosure, it is possible to appropriately control SP-CSI reporting and/or detection even in the case that activation of the SP-CSI reporting is indicated by the downlink control information (DCI).

## Description

### Technical Field

The present disclosure relates to a user terminal and a radio communication method in next-generation mobile communication systems.

### Background Art

In the Universal Mobile Telecommunications System (UMTS) network, the specifications of Long Term Evolution (LTE) have been drafted for the purpose of further increasing high speed data rates, providing lower latency and so on (see Non-Patent Literature 1). For the purpose of further high capacity, advancement of LTE (LTE Rel. 8, Rel. 9), and so on, the specifications of LTE-A (LTE-Advanced, LTE Rel. 10, Rel. 11, Rel. 12, Rel. 13) have been drafted.

Successor systems of LTE (referred to as, for example, "Future Radio Access (FRA)," "5th generation mobile communication system (5G)," "5G+ (plus)," "New Radio (NR)," "New radio access (NX)," "Future generation radio access (FX)," "LTE Rel. 14," "LTE Rel. 15" (or later versions), and so on) are also under study.

In existing LTE systems (for example, LTE Rel. 8 to Rel. 13), a user terminal (UE (User Equipment)) periodically and/or aperiodically transmits channel state information (CSI) to a base station. The UE transmits the CSI by using an uplink control channel (Physical Uplink Control Channel (PUCCH)) and/or an uplink shared channel (Physical Uplink Shared Channel (PUSCH)).

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, NR), a study is underway to perform CSI reporting by using a configuration different from existing LTE systems (for example, pre-LTE Rel. 13).

For example, a study is underway to perform Semi-Persistent CSI (SP-CSI) reporting. In this case, a UE reports CSI by using a resource that is semi-persistently specified.

Another study is also underway to control activation of the SP-CSI reporting by using downlink control information (DCI). Nevertheless, studies on information contained in the DCI and actions of the UE based on the DCI have not sufficiently progressed. Unless these are appropriately determined, actions based on the SP-CSI reporting are not suitably performed, whereby problems such as reduction of throughput occurs.

It is therefore an object of the present disclosure to provide a user terminal and a radio communication method in which SP-CSI reporting and/or detection can be appropriately controlled even in the case that activation of SP-CSI reporting is indicated by DCI.

### Solution to Problem

A user terminal according to one aspect of the present disclosure includes: a receiving section that receives downlink control information (DCI) for indicating activation or deactivation of semi-persistent channel state information (SP-CSI) reporting; and a control section that determines a configuration of the SP-CSI reporting based on a format of the downlink control information.

### Advantageous Effects of Invention

According to one aspect of the present disclosure, it is possible to appropriately control SP-CSI reporting and/or detection even in the case that activation of the SP-CSI reporting is indicated by DCI.

### Brief Description of Drawings

FIGS. 1A and 1B are diagrams to show examples of a DCI format for activation according to a first embodiment.
FIG. 2 is a diagram to show an example of a DCI format for activation according to a second embodiment.
FIGS. 3A and 3B are diagrams to show examples of a DCI format for activation according to Embodiment 2.1.
FIG. 4 is a diagram to show an example of a schematic structure of a radio communication system according to one embodiment;
FIG. 5 is a diagram to show an example of an overall structure of a radio base station according to one embodiment;
FIG. 6 is a diagram to show an example of a functional structure of the radio base station according to one embodiment;
FIG. 7 is a diagram to show an example of an overall structure of a user terminal according to one embodiment;
FIG. 8 is a diagram to show an example of a functional structure of the user terminal according to one embodiment; and
FIG. 9 is a diagram to show an example of a hardware structure of the radio base station and the user terminal according to one embodiment.

### Description of Embodiments

For NR, a study for a reference signal for measuring a channel state in downlink is underway. The reference signal for measuring a channel state may be a signal that is referred to as a "Cell-specific Reference Signal (CRS)," a "Channel State Information-Reference Signal (CSI-RS)," and so on.

A UE feeds back (reports) result of measurement that is based on the reference signal for measuring the channel state, to a radio base station (which may be referred to as, for example, a "Base Station (BS)," a "transmission/reception point (TRP)," an "eNodeB (eNB)," a "NR NodeB (gNB)," and so on) at given timing as channel state information (CSI). The CSI may include a Channel Quality Indicator (CQI), a Precoding Matrix Indicator (PMI), a Rank Indicator (RI), L1-RSRP (reference signal received power (RSRP) in a physical layer), and so on.

As methods for feeding back the CSI, (1) periodic CSI (P-CSI) reporting, (2) aperiodic CSI (A-CSI) reporting, (3) semi-persistent CSI (SP-CSI) reporting, and so on are under study.

Once a resource for the SP-CSI reporting (which may be referred to as an "SP-CSI resource") is specified, the UE can periodically use the resource based on this specification unless cancellation (release or deactivation) of the SP-CSI resource is specified.

The SP-CSI resource may be a resource that is configured by higher layer signaling or a resource that is specified by an activation signal (which may be referred to as a "trigger signal") for SP-CSI reporting.

Here, for example, the higher layer signaling may be any one or combinations of Radio Resource Control (RRC) signaling, Medium Access Control (MAC) signaling, broadcast information, and the like.

For example, the MAC signaling may use MAC control elements (MAC CE), MAC Protocol Data Units (PDUs), and the like. For example, the broadcast information may be master information blocks (MIBs), system information blocks (SIBs), minimum system information (Remaining Minimum System Information (RMSI)), and the like.

The information of the SP-CSI resource may include, for example, information relating to report periodicity (ReportPeriodicity) and offset (ReportSlotOffset), and such information may be expressed in units of slots, units of subframes, and so on. The information of the SP-CSI resource may include a configuration ID (CSI-ReportConfigId), and parameters such as the type of the method of CSI reporting (whether SP-CSI is used or not, and the like) and report periodicity may be identified by the configuration ID. The information of the SP-CSI resource may be referred to as an "SP-CSI resource configuration," an "SP-CSI reporting configuration," and so on.

When receiving a given activation signal, the UE can periodically perform CSI measurement using, for example, a given reference signal (which may be referred to as, e.g., an "SP-CSI-RS") and/or SP-CSI reporting using an SP-CSI resource. The UE stops the SP-CSI measurement and/or reporting when receiving a given deactivation signal or when a given timer expires.

The SP-CSI report may be transmitted by using a primary cell (PCell), a primary secondary cell (PSCell), a PUCCH secondary cell (PUCCH SCell), other cell (for example, a secondary cell), and so on.

Activation/deactivation signals for the SP-CSI reporting may be reported by using, for example, MAC signaling (e.g., MAC CE) or physical layer signaling (e.g., downlink control information (DCI)).

Note that the SP-CSI report may be transmitted by using one or both of the PUCCH and the PUSCH. The selection of one or both of the PUCCH and the PUSCH may be configured to the UE by RRC signaling from a gNB, may be specified by a MAC CE or the like, or may be reported by DCI.

The channel for the SP-CSI reporting may be judged based on an activation signal for the SP-CSI reporting. For example, the SP-CSI reporting using the PUCCH may be activated by MAC CE, and the SP-CSI reporting using the PUSCH may be triggered by DCI.

This DCI may be DCI in which cyclic redundancy check (CRC) bits are masked (scrambled) by a radio network temporary identifier (RNTI) for the SP-CSI reporting.

In a case that a plurality of SP-CSI resources are configured in the UE, an activation signal for the SP-CSI reporting may contain information indicating one of the plurality of the SP-CSI resources. In this case, the UE can determine a resource to be used for the SP-CSI reporting, based on the activation signal for the SP-CSI reporting.

The UE may transmit a feedback in response to reception of given activation/deactivation signals. The feedback may be acknowledgment (ACK). For example, in a case that given activation/deactivation signals are transmitted by using a MAC CE, this MAC CE is included in a PDSCH to transmit, and therefore, the feedback may be an HARQ feedback (e.g., ACK, NACK (Negative ACK), or Discontinuous Transmission (DTX)) with respect to the PDSCH.

As described above, controlling of activation of the SP-CSI reporting by DCI is under study in NR. Studies on information contained in the DCI and actions of the UE based on the DCI have not sufficiently progressed. Unless these are appropriately determined, actions based on the SP-CSI reporting are not suitably performed, whereby problems such as reduction of throughput occurs.

In view of this, the inventors of the present invention came up with a method for appropriately performing the SP-CSI reporting and/or detection even in a case that activation of the SP-CSI reporting is reported by DCI.

Embodiments according to the present disclosure will be described in detail with reference to the drawings as follows. The radio communication method according to each embodiment may be employed independently or may be employed in combination.

Hereinafter, the DCI for activation and/or deactivation of the SP-CSI reporting using a PUSCH may be also simply described as "DCI for activation" for simplicity. Note that the PUSCH may be interpreted as the PUCCH.

In this specification, the phrase "activate the configuration" may mean that "activate reporting based on the configuration."

In this specification, "activate" may be interpreted as "activate and/or deactivate." The "activation" may be interpreted as "activation and/or deactivation." The "DCI format" and the "DCI" may be interpreted interchangeably.

### (Radio Communication Method)

### <First Embodiment>

A DCI format for activation in a first embodiment includes a CSI request field for activating a specific CSI configuration. A UE may activate one or a plurality of SP-CSI configurations that are indicated by the CSI request field.

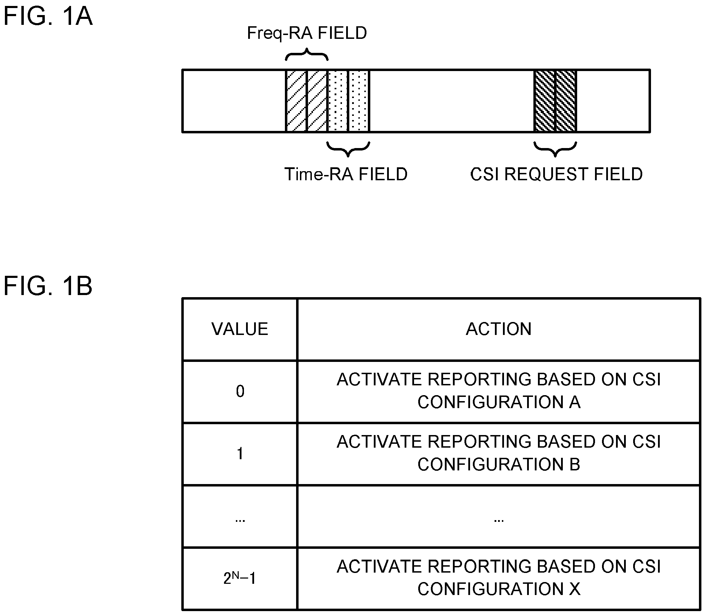

FIGS. 1A and 1B are diagrams to show examples of the DCI format for activation according to the first embodiment. As shown in FIG. 1A, the DCI format includes a CSI request field of N bits.

As shown in FIG. 1A, the DCI format for activation may include a frequency domain resource assignment (Freq-RA) field. The Freq-RA field may indicate a frequency resource (for example, a resource block (Physical Resource Block (PRB) and so on) of a PUSCH to be used for the SP-CSI reporting.

As shown in FIG. 1A, the DCI format for activation may include a time domain resource assignment (Time-RA) field. The Time-RA field may indicate a time resource (for example, symbols, slots, and so on) of a PUSCH to be used for the SP-CSI reporting.

Illustration other than the CSI request field, the Freq-RA field, and the Time-RA field are omitted in FIG. 1A. Note that the size, the position, and so on of each field are not limited to the aspects shown in FIGS. 1A to 3B.

The UE may control activation for the SP-CSI, based on a correspondence relationship between a value of the CSI request field and the CSI configuration to be activated. The correspondence relationship may be determined by specifications or may be configured by higher layer signaling (for example, RRC signaling).

FIG. 1B shows an example of a correspondence relationship between the value of the CSI request field and the CSI configuration (-based action) to be activated. In this example, the CSI request field = 0 corresponds to activate of a CSI configuration A, the CSI request field = 1 corresponds to activate of a CSI configuration B, ..., and the CSI request field = 2^{N} - 1 corresponds to activate of a CSI configuration X. However, the correspondence relationship is not limited to this example.

For example, the CSI request field = 0 may correspond to a first configuration ID, the CSI request field = 1 may correspond to a second configuration ID, ..., and the CSI request field = 2^{N} - 1 may correspond to a Y-th configuration ID. The UE may activate the CSI setting that corresponds to the indicated configuration ID.

Code points (values specified by bits) of the CSI request field may correspond to one or a plurality of the CSI setting (which may be interpreted that the CSI reporting is to be included).

Note that the code points may not include a code point indicating that "there is no CSI request." The code points may or may not include a code point indicating that "deactivate one or a plurality or all of the CSI configurations."

The Freq-RA field may be represented by a bitmap (in which, for example, one bit corresponds to one frequency domain unit) based on a given frequency domain (for example, a PRB, a resource block group (RGB), or a sub-carrier group (SCG)).

The Freq-RA field may be represented by a Resource Indication Value (RIV) that indicates a start position and length of a continuous frequency resource.

The Time-RA field may indicate one of or a combination of start time (for example, start symbol), time length, mapping type, offset from reception of the DCI to the SP-CSI reporting, and so on. The offset may be referred to as "K2" and so on. The mapping type may be information that enables identification of at least one of start position, time length, periodicity, and so on.

The UE may determine a time resource of the SP-CSI, based on a correspondence relationship between a value of the Time-RA field and a parameter set (which may be referred to as an "entry") relating to the time resource. The correspondence relationship may be determined by specifications or may be configured by higher layer signaling (for example, RRC signaling). One entry may correspond to, for example, a set of start time, time length, mapping type, and K2.

The UE may determine a radio resource (for example, frequency and/or time resources) of a PUSCH to be used for the SP-CSI reporting, based on the RA field (Freq-RA field and/or Time-RA field).

Note that the DCI format for activation may include a flag bit (which may be referred to as an "activation flag field") that indicates which of activation and deactivation is indicated.

The DCI format for activation according to the first embodiment may have the same format as DCI format 0_1 (Embodiment 1.1) or a new DCI format (Embodiment 1.2). Note that DCI format 0_1 may be interpreted as the phrase such as "non-fallback DCI" or "non-fallback UL grant."

### [Embodiment 1.1]

The DCI format for activation using DCI format 0_1 may be DCI with CRC bits scrambled by an RNTI for the SP-CSI reporting. The RNTI for the SP-CSI reporting may be referred to as an "SP-CSI-RNTI," an "SP-CSI C-RNTI (SP-CSI Cell-RNTI)," and so on.

The UE can determine whether the detected DCI is the DCI for scheduling UL data (DCI format 0_1) or the DCI for activating the SP-CSI reporting (DCI format for activation using DCI format 0_1), by the RNTI corresponding to the DCI.

The size (the number of bits) of the CSI request field may be the same as the size (which may be referred to as a "ReportTriggerSize" and so on) of the CSI request field that is configured by higher layer signaling (for example, RRC signaling). The size of the configured CSI request field may correspond to the size of the CSI request field for DCI format 0_1. The "ReportTriggerSize" may be, for example, any number of bits (1, 2, 3, 4, ...).

Among fields that are originally included in DCI format 0_1 (for example, an HARQ process number (HPN) field, a redundancy version (RV) field, a new data indicator (NDI) field, a Modulation and Coding Scheme (MCS) field, and so on), one or a plurality of the fields (in particular, fields other than the CSI request field and the RA field) may be interpreted as having meanings different from the respective original meanings.

A bit string that is included in one or a plurality of the fields (for example, HPN, RV, and NDI fields) may have values that are all fixed to a given value (for example, all "1," all "0," and so on), in the case of being included in the DCI format for activation. The UE can judge which of activation and deactivation is indicated by the DCI format for activation, based on the given value. In this case, the activation flag field can be represented by the field that is originally included in DCI format 0_1.

For example, the UE may interpret that activation of the CSI configuration corresponding to the CSI request field is indicated in the condition in which the bits of fields other than the CSI request field and the RA field are all "1," and the UE may interpret that deactivation of the CSI configuration corresponding to the CSI request field is indicated in the condition in which these bits are all "0." Note that the values of the bit string corresponding to activation/deactivation are not limited to these examples.

Among the fields that are originally included in DCI format 0_1, one or a plurality of the fields may be interpreted as a second CSI request field. The second CSI request field may be used as one field by combining with the CSI request field or may be used as a field that indicates activation of the CSI configuration different from that in the CSI request field. In the latter case, the correspondence relationship between the value of the second CSI request field and the CSI configuration may be configured differently from the correspondence relationship between the value of the CSI request field and the CSI configuration.

In a case that monitoring of DCI format 0_1 is configured by a given search space configuration and an SP-CSI-RNTI is configured, the UE may monitor DCI format 0_1 with CRC bits scrambled by the SP-CSI-RNTI, in accordance with the search space configuration. Otherwise, the UE may not monitor DCI format 0_1 with the CRC bits scrambled by the SP-CSI-RNTI.

According to Embodiment 1.1 described above, the UE can monitor the DCI format for activation without increasing another search space for monitoring in the case of monitoring DCI format 0_1.

### [Embodiment 1.2]

The DCI format for activation may be a new DCI format that includes at least an RA field (for example, Freq-RA and/or Time-RA fields) and a CSI request field. The "new DCI format" means a format that is different from an existing DCI format (for example, DCI format 0_1).

The DCI format for activation using the new DCI format may be referred to as, for example, "DCI format 2_4" and so on (hereinafter simply referred to as "DCI format 2 4"). The size (payload size) of DCI format 2_4 may be different from the size of DCI format 0_1.

The DCI format for activation using DCI format 2_4 may be DCI in which CRC bits are scrambled by an SP-CSI-RNTI.

Even in the case that DCI format 2_4 has the same size as other DCI format (for example, DCI format 2_X), the UE can determine whether the detected DCI is DCI format 2_4 or other format, based on the RNTI corresponding to the DCI.

The size (the number of bits) of the CSI request field of DCI format 2_4 may be configured by higher layer signaling. Here, the size of the CSI request field of DCI format 2_4 may be configured independently of or differently from the size of the CSI request field ("ReportTriggerSize" described above) for other DCI format (for example, DCI format 0_1) which is separately configured by higher layer signaling (for example, RRC signaling).

In a case that monitoring of DCI format 2_4 is configured by a given search space configuration, the UE may monitor DCI format 2_4 in accordance with the search space configuration.

In a case that monitoring of DCI format 2_4 and other DCI format are configured by a given search space configuration, the UE may assume that the payload size of DCI format 2_4 is the same as that of the other DCI format.

According to Embodiment 1.2 described above, the UE can easily judge activation of the SP-CSI reporting, based on the dedicated DCI format.

According to the first embodiment described above, on the basis of the DCI format for activation, the configuration of the SP-CSI reporting to be activated can be determined by using the CSI request field included in the DCI. Thus, it is possible to appropriately perform SP-CSI reporting and/or detection without causing inconsistency in the SP-CSI configuration between a UE and a gNB even in the case that activation of the SP-CSI reporting is indicated by the DCI.

### <Second Embodiment>

The DCI format for activation in a second embodiment does not include a CSI request field for activating a specific CSI configuration. The UE may activate given one or a plurality of the SP-CSI configurations when detecting this DCI format for activation.

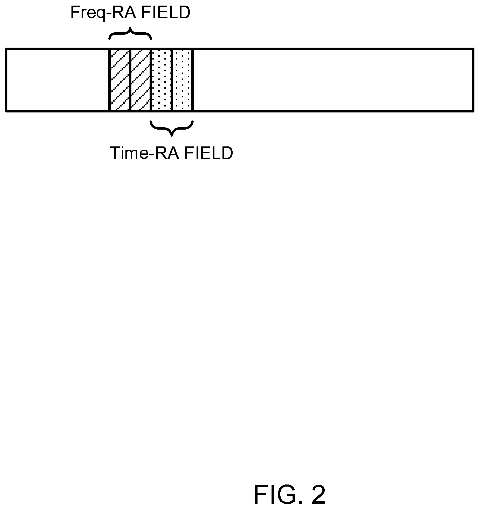

FIG. 2 is a diagram to show an example of the DCI format for activation according to the second embodiment. This DCI format does not include a CSI request field.

As shown in FIG. 2, the DCI format for activation may include an RA field (Freq-RA field and/or Time-RA field). The action relating to the RA field may be similar to that described above in the first embodiment, and therefore, details thereof are not repeatedly described here.

Illustration other other than the Freq-RA field and the Time-RA field are omitted in FIG. 2.

The UE may control activation for the SP-CSI, based on a correspondence relationship between the DCI format for activation and the CSI configuration to be activated. The correspondence relationship may be determined by specifications or may be configured by higher layer signaling (for example, RRC signaling). The UE may activate one or a plurality of the SP-CSI configurations based on the correspondence relationship when detecting the DCI format for activation.

In other words, a CSI configuration for performing the SP-CSI reporting using a PUSCH may be configured in the UE. The UE may activate the configured CSI configuration when detecting the DCI format for activation. The CSI configuration may be identified by, for example, a configuration ID.

Note that the DCI format for activation may include an activation flag field as in the case of the format in the first embodiment.

The DCI format for activation according to the second embodiment may have the same format as DCI format 0_0 (Embodiment 2.1) or a new DCI format (Embodiment 2.2). Note that DCI format 0_0 may be interpreted as the phrase such as "fallback DCI" or "fallback UL grant."

### [Embodiment 2.1]

The DCI format for activation using DCI format 0_0 may be DCI in which CRC bits are scrambled by an SP-CSI-RNTI.

The UE can determine whether the detected DCI is DCI for scheduling UL data (DCI format 0_0) or DCI for activating the SP-CSI reporting (DCI format for activation using DCI format 0_0), by the RNTI corresponding to the DCI.

Among fields that are originally included in DCI format 0_0 (for example, an HPN field, an RV field, an NDI field, an MCS field, and so on), one or a plurality of the fields (in particular, fields other than the RA field) may be interpreted as having meanings different from the respective original meanings.

A bit string that is included in one or a plurality of the fields (for example, HPN, RV, and NDI fields) may have values that are all fixed to a given value (for example, all "1," all "0," and so on), in the case of being included in the DCI format for activation. The UE can judge which of activation and deactivation is indicated by the DCI format for activation, based on the given value. In this case, an activation flag field can be represented by the field that is originally included in DCI format 0_0.

In a case that monitoring of DCI format 0_0 is configured by a given search space configuration and an SP-CSI-RNTI is configured, the UE may monitor DCI format 0_0 with CRC bits scrambled by the SP-CSI-RNTI, in accordance with the search space configuration. Otherwise, the UE may not monitor DCI format 0_0 with the CRC bits scrambled by the SP-CSI-RNTI.

According to Embodiment 2.1 described above, the UE can monitor the DCI format for activation without increasing another search space for monitoring in the case of monitoring DCI format 0_0.

### [Variations of Embodiment 2.1]

Note that a bit string included in one or a plurality of the fields (for example, HPN, RV, and NDI fields) may be interpreted as a CSI request field. Bit strings other than the field that is interpreted as the CSI request field and the RA field may have values that are all fixed to a given value (for example, all "1," all "0," and so on). The UE can judge which of activation and deactivation is indicated by the DCI format for activation, based on the given value.

The UE may control activation for the SP-CSI, based on a correspondence relationship between a value of the field interpreted as the CSI request field and the CSI configuration to be activated. The correspondence relationship may be determined by specifications or may be configured by higher layer signaling (for example, RRC signaling). The UE may activate one or a plurality of the SP-CSI configurations that are indicated by the field.

In the DCI format for activation using DCI format 0_0, information relating to the number of bits that is interpreted as the CSI request field, information relating to a field that is able to be interpreted as the CSI request field, and so on may be reported by higher layer signaling (for example, RRC signaling), physical layer signaling (for example, DCI), or may be defined by specifications.

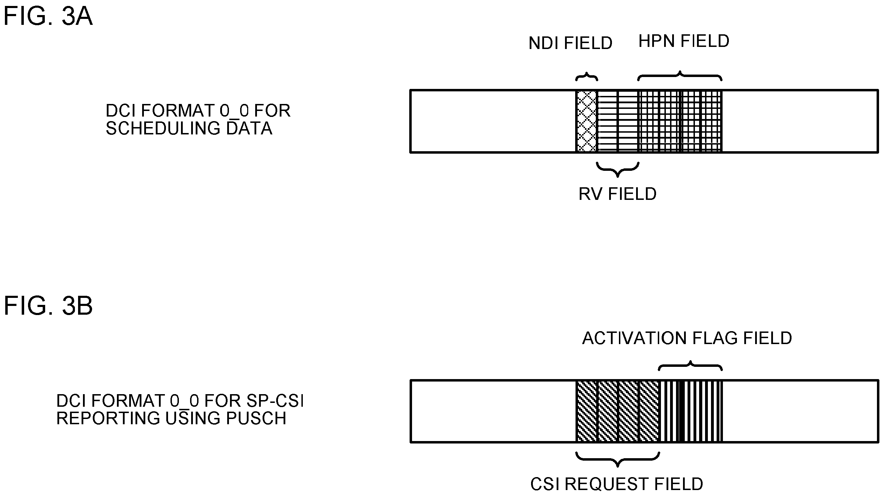

FIGS. 3A and 3B are diagrams to show examples of the DCI format for activation according to Embodiment 2.1. FIG. 3A corresponds to DCI format 0_0 for scheduling data, and FIG. 3B shows DCI format 0_0 (for activation) for CSI reporting using a PUSCH.

As shown in FIG. 3A, this example assumes that the sizes of an NDI field, an RV field, and an HPN field originally included in DCI format 0_0 are respectively 1, 2, and 4 bits. However, the number of bits in each of the fields is not limited to this example. In this example, illustration other than these fields are omitted in the drawing.

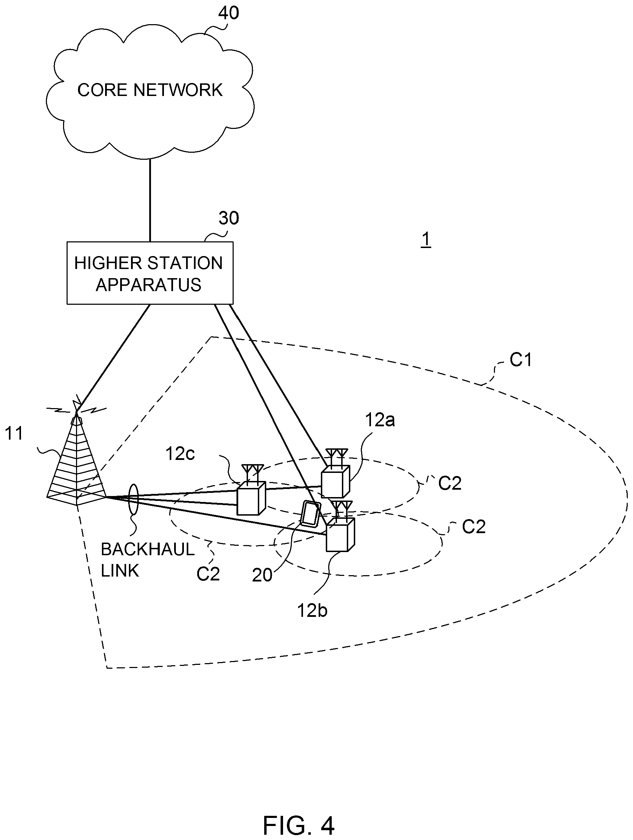

In this example, the UE is assumed to be configured in such a manner that the number of bits that is interpreted as the CSI request field is 4 and fields that are able to be interpreted as the CSI request field are the NDI, the RV, and the HPN. In this case, as shown in FIG. 3B, 4 bits that are composed of 1 bit of the NDI of DCI format 0_0, 2 bits of the RV, and 1 bit of the HPN may be interpreted as the CSI request field in the DCI format for activation.

As shown in FIG. 3B, among the bit strings included in the field that is able to be interpreted as the CSI request field, the bit string that is not interpreted as the CSI request field may be used as an activation flag field. In the case of this example, the trailing 3 bits of the HPN field, excluding the leading bit, may be used as an activation flag field.

For example, the UE may interpret that activation of the CSI configuration corresponding to the CSI request field is indicated in a case that these 3 bits are all 1 ('1 1 1'), and the UE may interpret that deactivation of the CSI configuration corresponding to the CSI request field is indicated in a case that these 3 bits are all 0 ('0 0 0').

According to the variations of Embodiment 2.1 described above, the CSI request field can be reported to the UE without increasing the size of DCI format 0_0.

### [Embodiment 2.2]

The DCI format for activation may be a new DCI format that includes at least an RA field (for example, Freq-RA and/or Time-RA fields). The "new DCI format" means a format that is different from an existing DCI format (for example, DCI format 0_0).

The DCI format for activation using the new DCI format may be referred to as, for example, "DCI format 2_4" and so on (hereinafter simply referred to as "DCI format 2 4"). The size (payload size) of DCI format 2_4 may be different from the size of DCI format 0_0.

The DCI format for activation using DCI format 2_4 may be DCI in which CRC bits are scrambled by an SP-CSI-RNTI.

Even in the case that DCI format 2_4 has the same size as other DCI format (for example, DCI format 2_X), the UE can determine whether the detected DCI is DCI format 2_4 or other format, based on the RNTI corresponding to the DCI.

In a case that monitoring of DCI format 2_4 is configured by a given search space configuration, the UE may monitor DCI format 2_4 in accordance with the search space configuration.

In a case that monitoring of DCI format 2_4 and other DCI format are configured by a given search space configuration, the UE may assume that the payload size of DCI format 2_4 is the same as that of the other DCI format.

According to Embodiment 2.2 described above, the UE can easily determine activation of the SP-CSI reporting, based on the dedicated DCI format.

According to the second embodiment described above, on the basis of the DCI format for activation, the configuration of the SP-CSI reporting to be activated can be determined by using the configuration of the SP-CSI reporting associated with the DCI format or the field included in the DCI. Thus, it is possible to appropriately perform SP-CSI reporting and/or detection without causing inconsistency in the SP-CSI configuration between a UE and a gNB even in the case that activation of the SP-CSI reporting is indicated by the DCI.

### <Variations>

Transmission of the SP-CSI report using a PUSCH may be modified by the DCI for activation. For example, the DCI for activation may include a field corresponding to a parameter relating to transmission of the SP-CSI report (also simply referred to as a "transmission parameter"), such as parameters relating to resource allocation, demodulation reference signal (DMRS) pattern of the PUSCH, mapping of resource element (RE) for the SP-CSI reporting using the PUSCH, and so on.

These parameters may be modified by the DCI for activation after once being configured by higher layer signaling (RRC signaling and so on).

When once receiving the DCI for activation, the UE starts transmission of the SP-CSI report by using the PUSCH, based on periodicity and/or offset indicated by the DCI. In a case that the field corresponding to the transmission parameter for the SP-CSI reporting described above is included in the DCI, the UE may modify the transmission parameter for the SP-CSI reporting, based on the field.

The UE may modify the transmission parameter for the SP-CSI reporting without deactivating the SP-CSI reporting. That is, in the case that the UE again receives the DCI for activation for activating the SP-CSI configuration that is already activated, the UE may modify the transmission parameter for the SP-CSI reporting based on the field corresponding to the transmission parameter for the SP-CSI reporting included in the DCI.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

FIG. 4 is a diagram to show an example of a schematic structure of the radio communication system according to one embodiment. A radio communication system 1 can adopt carrier aggregation (CA) and/or dual connectivity (DC) to group a plurality of fundamental frequency blocks (component carriers) into one, where the system bandwidth in an LTE system (for example, 20 MHz) constitutes one unit.

Note that the radio communication system 1 may be referred to as "Long Term Evolution (LTE)," "LTE-Advanced (LTE-A)," "LTE-Beyond (LTE-B)," "SUPER 3G," "IMT-Advanced," "4th generation mobile communication system (4G)," "5th generation mobile communication system (5G)," "New Radio (NR)," "Future Radio Access (FRA)," "New-RAT (Radio Access Technology)," and so on, or may be referred to as a system implementing these.

The radio communication system 1 includes a radio base station 11 that forms a macro cell C1 of a relatively wide coverage, and radio base stations 12 (12a to 12c) that form small cells C2, which are placed within the macro cell C1 and which are narrower than the macro cell C1. Also, user terminals 20 are placed in the macro cell C1 and in each small cell C2. The arrangement, the number, and the like of each cell and user terminal 20 are by no means limited to the aspect shown in the diagram.

The user terminals 20 can connect with both the radio base station 11 and the radio base stations 12. It is assumed that the user terminals 20 use the macro cell C1 and the small cells C2 at the same time by means of CA or DC. The user terminals 20 can execute CA or DC by using a plurality of cells (CCs).

Between the user terminals 20 and the radio base station 11, communication can be carried out by using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz, and so on) and a wide bandwidth may be used, or the same carrier as that used between the user terminals 20 and the radio base station 11 may be used. Note that the structure of the frequency band for use in each radio base station is by no means limited to these.

The user terminals 20 can perform communication by using time division duplex (TDD) and/or frequency division duplex (FDD) in each cell. Furthermore, in each cell (carrier), a single numerology may be employed, or a plurality of different numerologies may be employed.

Numerologies may be communication parameters applied to transmission and/or reception of a given signal and/or channel, and for example, may indicate at least one of a subcarrier spacing, a bandwidth, a symbol length, a cyclic prefix length, a subframe length, a TTI length, the number of symbols per TTI, a radio frame structure, a particular filter processing performed by a transceiver in a frequency domain, a particular windowing processing performed by a transceiver in a time domain, and so on. For example, if given physical channels use different subcarrier spacings of the OFDM symbols constituted and/or different numbers of the OFDM symbols, it may be referred to as that the numerologies are different.

A wired connection (for example, means in compliance with the Common Public Radio Interface (CPRI) such as an optical fiber, an X2 interface and so on) or a wireless connection may be established between the radio base station 11 and the radio base stations 12 (or between two radio base stations 12).

The radio base station 11 and the radio base stations 12 are each connected with a higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNodeB (eNB)," a "transmitting/receiving point" and so on. The radio base stations 12 are radio base stations having local coverages, and may be referred to as "small base stations," "micro base stations," "pico base stations," "femto base stations," "Home eNodeBs (HeNBs)," "Remote Radio Heads (RRHs)," "transmitting/receiving points" and so on. Hereinafter, the radio base stations 11 and 12 will be collectively referred to as "radio base stations 10," unless specified otherwise.

Each of the user terminals 20 is a terminal that supports various communication schemes such as LTE and LTE-A, and may include not only mobile communication terminals (mobile stations) but stationary communication terminals (fixed stations).

In the radio communication system 1, as radio access schemes, orthogonal frequency division multiple access (OFDMA) is applied to the downlink, and single carrier frequency division multiple access (SC-FDMA) and/or OFDMA is applied to the uplink.

OFDMA is a multi-carrier communication scheme to perform communication by dividing a frequency band into a plurality of narrow frequency bands (subcarriers) and mapping data to each subcarrier. SC-FDMA is a single carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are by no means limited to the combinations of these, and other radio access schemes may be used.

In the radio communication system 1, a downlink shared channel (Physical Downlink Shared Channel (PDSCH), which is used by each user terminal 20 on a shared basis, a broadcast channel (Physical Broadcast Channel (PBCH)), downlink L1/L2 control channels and so on, are used as downlink channels. User data, higher layer control information, System Information Blocks (SIBs) and so on are communicated on the PDSCH. The Master Information Blocks (MIBs) are communicated on the PBCH.

The downlink L1/L2 control channels include a Physical Downlink Control Channel (PDCCH), an Enhanced Physical Downlink Control Channel (EPDCCH), a Physical Control Format Indicator Channel (PCFICH), a Physical Hybrid-ARQ Indicator Channel (PHICH) and so on. Downlink control information (DCI), including PDSCH and/or PUSCH scheduling information, and so on are communicated on the PDCCH.

Note that the scheduling information may be reported by the DCI. For example, the DCI scheduling DL data reception may be referred to as "DL assignment," and the DCI scheduling UL data transmission may be referred to as "UL grant."

The number of OFDM symbols to use for the PDCCH is communicated on the PCFICH. Transmission confirmation information (for example, also referred to as "retransmission control information," "HARQ-ACK," "ACK/NACK," and so on) of Hybrid Automatic Repeat reQuest (HARQ) to a PUSCH is transmitted on the PHICH. The EPDCCH is frequency-division multiplexed with the PDSCH (downlink shared data channel) and used to communicate DCI and so on, like the PDCCH.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on are used as uplink channels. User data, higher layer control information and so on are communicated on the PUSCH. In addition, radio quality information (Channel Quality Indicator (CQI)) of the downlink, transmission confirmation information, scheduling request (SR), and so on are transmitted on the PUCCH. By means of the PRACH, random access preambles for establishing connections with cells are communicated.

In the radio communication system 1, a cell-specific reference signal (CRS), a channel state information-reference signal (CSI-RS), a demodulation reference signal (DMRS), a positioning reference signal (PRS), and so on are transmitted as downlink reference signals. In the radio communication system 1, a measurement reference signal (Sounding Reference Signal (SRS)), a demodulation reference signal (DMRS), and so on are transmitted as uplink reference signals. Note that DMRS may be referred to as a "user terminal specific reference signal (UE-specific Reference Signal)." Transmitted reference signals are by no means limited to these.

### (Radio Base Station)

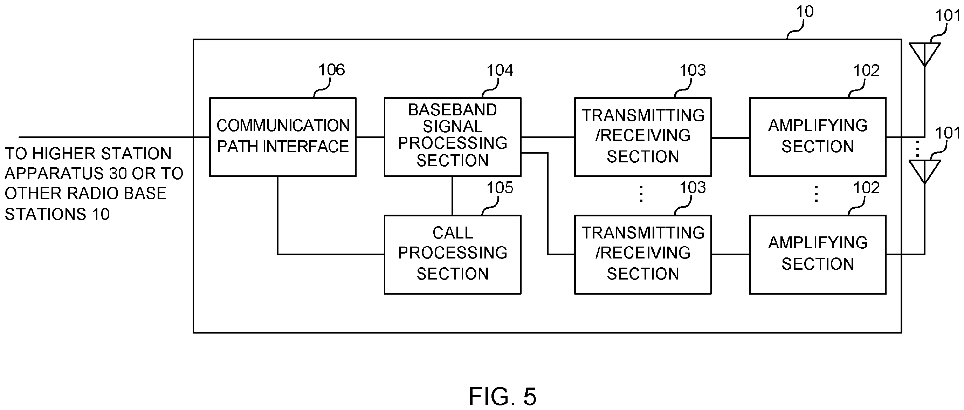

FIG. 5 is a diagram to show an example of an overall structure of the radio base station according to one embodiment. A radio base station 10 includes a plurality of transmitting/receiving antennas 101, amplifying sections 102, transmitting/receiving sections 103, a baseband signal processing section 104, a call processing section 105 and a communication path interface 106. Note that the radio base station 10 may be configured to include one or more transmitting/receiving antennas 101, one or more amplifying sections 102 and one or more transmitting/receiving sections 103.

User data to be transmitted from the radio base station 10 to the user terminal 20 by the downlink is input from the higher station apparatus 30 to the baseband signal processing section 104, via the communication path interface 106.

In the baseband signal processing section 104, the user data is subjected to transmission processes, such as a Packet Data Convergence Protocol (PDCP) layer process, division and coupling of the user data, Radio Link Control (RLC) layer transmission processes such as RLC retransmission control, Medium Access Control (MAC) retransmission control (for example, an HARQ transmission process), scheduling, transport format selection, channel coding, an inverse fast Fourier transform (IFFT) process, and a precoding process, and the result is forwarded to each transmitting/receiving section 103. Furthermore, downlink control signals are also subjected to transmission processes such as channel coding and inverse fast Fourier transform, and the result is forwarded to each transmitting/receiving section 103.

The transmitting/receiving sections 103 convert baseband signals that are pre-coded and output from the baseband signal processing section 104 on a per antenna basis, to have radio frequency bands and transmit the result. The radio frequency signals having been subjected to frequency conversion in the transmitting/receiving sections 103 are amplified in the amplifying sections 102, and transmitted from the transmitting/receiving antennas 101. The transmitting/receiving sections 103 can be constituted with transmitters/receivers, transmitting/receiving circuits or transmitting/receiving apparatus that can be described based on general understanding of the technical field to which the present disclosure pertains. Note that each transmitting/receiving section 103 may be structured as a transmitting/receiving section in one entity, or may be constituted with a transmitting section and a receiving section.

Meanwhile, as for uplink signals, radio frequency signals that are received in the transmitting/receiving antennas 101 are amplified in the amplifying sections 102. The transmitting/receiving sections 103 receive the uplink signals amplified in the amplifying sections 102. The transmitting/receiving sections 103 convert the received signals into the baseband signal through frequency conversion and outputs to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing (setting up, releasing and so on) for communication channels, manages the state of the radio base station 10, manages the radio resources and so on.

The communication path interface 106 transmits and/or receives signals to and/or from the higher station apparatus 30 via a given interface. The communication path interface 106 may transmit and/or receive signals (backhaul signaling) with other radio base stations 10 via an inter-base station interface (for example, an optical fiber in compliance with the Common Public Radio Interface (CPRI) and an X2 interface).

The transmitting/receiving sections 103 may receive channel state information (SP-CSI) that is transmitted from the user terminal 20 on a PUCCH and/or a PUSCH, by using a semi-persistently specified resource. The transmitting/receiving sections 103 may transmit DCI for activation for the SP-CSI, to the user terminal 20.

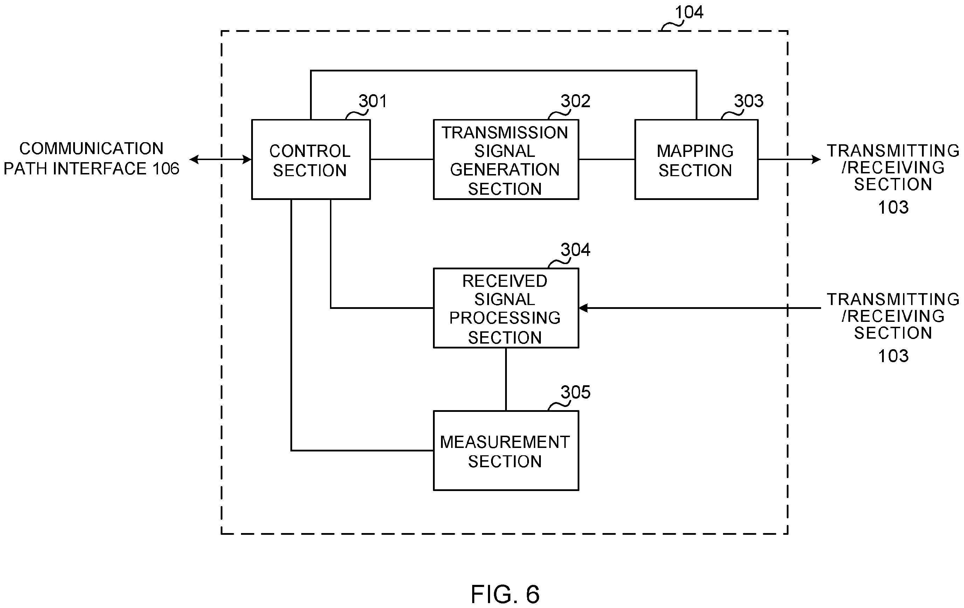

FIG. 6 is a diagram to show an example of a functional structure of the radio base station according to one embodiment. Note that, the present example primarily shows functional blocks that pertain to characteristic parts of the present embodiment, and it is assumed that the radio base station 10 may include other functional blocks that are necessary for radio communication as well.

The baseband signal processing section 104 at least includes a control section (scheduler) 301, a transmission signal generation section 302, a mapping section 303, a received signal processing section 304, and a measurement section 305. Note that these structures may be included in the radio base station 10, and some or all of the structures do not need to be included in the baseband signal processing section 104.

The control section (scheduler) 301 controls the whole of the radio base station 10. The control section 301 can be constituted with a controller, a control circuit or control apparatus that can be described based on general understanding of the technical field to which the present disclosure pertains.

The control section 301, for example, controls the generation of signals in the transmission signal generation section 302, the mapping of signals by the mapping section 303, and so on. The control section 301 controls the signal receiving processes in the received signal processing section 304, the measurements of signals in the measurement section 305, and so on.

The control section 301 controls the scheduling (for example, resource assignment) of system information, a downlink data signal (for example, a signal transmitted on the PDSCH), a downlink control signal (for example, a signal transmitted on the PDCCH and/or the EPDCCH. Transmission confirmation information, and so on). Based on the results of determining necessity or not of retransmission control to the uplink data signal, or the like, the control section 301 controls generation of a downlink control signal, a downlink data signal, and so on.

The control section 301 controls the scheduling of a synchronization signal (for example, Primary Synchronization Signal (PSS)/Secondary Synchronization Signal (SSS)), a downlink reference signal (for example, CRS, CSI-RS, DMRS), and so on.

The control section 301 controls the scheduling of an uplink data signal (for example, a signal transmitted on the PUSCH), an uplink control signal (for example, a signal transmitted on the PUCCH and/or the PUSCH. Transmission confirmation information, and so on), a random access preamble (for example, a signal transmitted on the PRACH), an uplink reference signal, and so on.

The control section 301 may control a receiving process (for example, decoding and so on) in a period during which the semi-persistently specified resource (SP-CSI resource) is included. The control section 301 may control generation and transmission of information for indicating start of semi-persistent channel state information reporting (SP-CSI reporting) (for example, DCI for activating the SP-CSI reporting).

For example, the control section 301 may determine a value of a CSI request field included in the DCI for activation, based on the configuration of the SP-CSI reporting.

The control section 301 may associate the configuration of the SP-CSI reporting with the DCI format for activation and may control to transmit the information related to the association to the user terminal 20.

The control section 301 may configure the DCI format for activation to have the same size as DCI format 0_0, 0_1, 1_0, 1_1, or 2_X. The control section 301 may generate the DCI for activation, as DCI with cyclic redundancy check (CRC) bits scrambled by an identifier for the SP-CSI reporting (SP-CSI-RNTI).

The transmission signal generation section 302 generates downlink signals (downlink control signals, downlink data signals, downlink reference signals and so on) based on commands from the control section 301 and outputs the downlink signals to the mapping section 303. The transmission signal generation section 302 can be constituted with a signal generator, a signal generation circuit or signal generation apparatus that can be described based on general understanding of the technical field to which the present disclosure pertains.

For example, the transmission signal generation section 302 generates DL assignment to report assignment information of downlink data and/or UL grant to report assignment information of uplink data, based on commands from the control section 301. The DL assignment and the UL grant are both DCI, and follow the DCI format. For a downlink data signal, encoding processing and modulation processing are performed in accordance with a coding rate, modulation scheme, or the like determined based on channel state information (CSI) from each user terminal 20.

The mapping section 303 maps the downlink signals generated in the transmission signal generation section 302 to given radio resources, based on commands from the control section 301, and outputs these to the transmitting/receiving sections 103. The mapping section 303 can be constituted with a mapper, a mapping circuit or mapping apparatus that can be described based on general understanding of the technical field to which the present disclosure pertains.

The received signal processing section 304 performs receiving processes (for example, demapping, demodulation, decoding and so on) of received signals that are input from the transmitting/receiving sections 103. Here, the received signals are, for example, uplink signals that are transmitted from the user terminals 20 (uplink control signals, uplink data signals, uplink reference signals and so on). The received signal processing section 304 can be constituted with a signal processor, a signal processing circuit or signal processing apparatus that can be described based on general understanding of the technical field to which the present disclosure pertains.

The received signal processing section 304 outputs the decoded information acquired through the receiving processes to the control section 301. For example, if the received signal processing section 304 receives the PUCCH including HARQ-ACK, the received signal processing section 304 outputs the HARQ-ACK to the control section 301. The received signal processing section 304 outputs the received signals and/or the signals after the receiving processes to the measurement section 305.

The measurement section 305 conducts measurements with respect to the received signals. The measurement section 305 can be constituted with a measurer, a measurement circuit or measurement apparatus that can be described based on general understanding of the technical field to which the present disclosure pertains.

For example, the measurement section 305 may perform Radio Resource Management (RRM) measurement, Channel State Information (CSI) measurement, and so on, based on the received signal. The measurement section 305 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 301.

### (User Terminal)

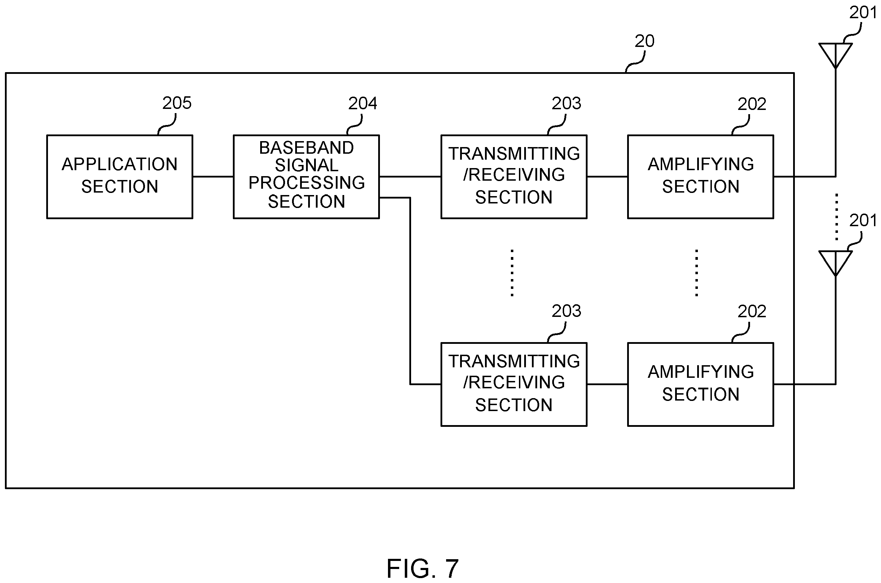

FIG. 7 is a diagram to show an example of an overall structure of a user terminal according to one embodiment. A user terminal 20 includes a plurality of transmitting/receiving antennas 201, amplifying sections 202, transmitting/receiving sections 203, a baseband signal processing section 204 and an application section 205. Note that the user terminal 20 may be configured to include one or more transmitting/receiving antennas 201, one or more amplifying sections 202 and one or more transmitting/receiving sections 203.

Radio frequency signals that are received in the transmitting/receiving antennas 201 are amplified in the amplifying sections 202. The transmitting/receiving sections 203 receive the downlink signals amplified in the amplifying sections 202. The transmitting/receiving sections 203 convert the received signals into baseband signals through frequency conversion, and output the baseband signals to the baseband signal processing section 204. The transmitting/receiving sections 203 can be constituted with transmitters/receivers, transmitting/receiving circuits or transmitting/receiving apparatus that can be described based on general understanding of the technical field to which the present disclosure pertains. Note that each transmitting/receiving section 203 may be structured as a transmitting/receiving section in one entity, or may be constituted with a transmitting section and a receiving section.

The baseband signal processing section 204 performs, on each input baseband signal, an FFT process, error correction decoding, a retransmission control receiving process, and so on. The downlink user data is forwarded to the application section 205. The application section 205 performs processes related to higher layers above the physical layer and the MAC layer, and so on. In the downlink data, broadcast information may be also forwarded to the application section 205.

Meanwhile, the uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving section 203.

The transmitting/receiving sections 203 convert the baseband signals output from the baseband signal processing section 204 to have radio frequency band and transmit the result. The radio frequency signals having been subjected to frequency conversion in the transmitting/receiving sections 203 are amplified in the amplifying sections 202, and transmitted from the transmitting/receiving antennas 201.

The transmitting/receiving sections 203 may transmit the channel state information (SP-CSI) to the radio base station 10 on a PUCCH and/or a PUSCH by using a semi-persistently specified resource. The transmitting/receiving sections 203 may receive the DCI for activation for the SP-CSI, from the radio base station 10.

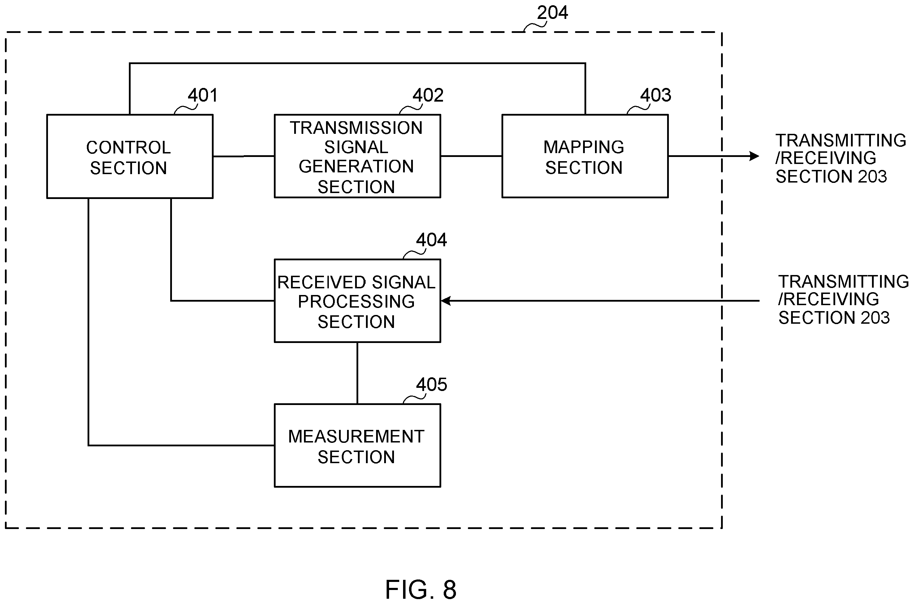

FIG. 8 is a diagram to show an example of a functional structure of a user terminal according to one embodiment. Note that, the present example primarily shows functional blocks that pertain to characteristic parts of the present embodiment, and it is assumed that the user terminal 20 may include other functional blocks that are necessary for radio communication as well.

The baseband signal processing section 204 provided in the user terminal 20 at least includes a control section 401, a transmission signal generation section 402, a mapping section 403, a received signal processing section 404 and a measurement section 405. Note that these structures may be included in the user terminal 20, and some or all of the structures do not need to be included in the baseband signal processing section 204.

The control section 401 controls the whole of the user terminal 20. The control section 401 can be constituted with a controller, a control circuit or control apparatus that can be described based on general understanding of the technical field to which the present disclosure pertains.

The control section 401, for example, controls the generation of signals in the transmission signal generation section 402, the mapping of signals by the mapping section 403, and so on. The control section 401 controls the signal receiving processes in the received signal processing section 404, the measurements of signals in the measurement section 405, and so on.

The control section 401 acquires a downlink control signal and a downlink data signal transmitted from the radio base station 10, from the received signal processing section 404. The control section 401 controls generation of an uplink control signal and/or an uplink data signal, based on the results of determining necessity or not of retransmission control to a downlink control signal and/or a downlink data signal.

The control section 401 may acquire information for indicating start of the semi-persistent channel state information reporting (SP-CSI reporting) (for example, DCI for activating the SP-CSI reporting) from the received signal processing section 404 and may perform control relating to the SP-CSI reporting. The SP-CSI report may be transmitted by using a PUSCH or a PUCCH. Note that the "start" may be interpreted as "activation and/or deactivation."

The control section 401 may determine the configuration of the SP-CSI reporting, based on the format of the DCI for activation. Here, the phrase "based on the format" may mean "based on the format itself" or "based on a bit string in the field included in the format."

The control section 401 may determine the configuration of the SP-CSI reporting, based on the CSI request field included in the DCI for activation.

The control section 401 may determine the configuration of the SP-CSI reporting, based on the configuration of the SP-CSI reporting associated with the DCI for activation. For example, the control section 401 may control to transmit the SP-CSI reporting by using the configuration of the SP-CSI reporting associated with the DCI for activation.

In the case that the DCI for activation does not include the CSI request field, the control section 401 may judge a bit string included in another one or a plurality of the fields of the DCI for activation, as a CSI request field, and the control section 401 may determine the configuration of the SP-CSI reporting, based on this CSI request field.

The DCI for activation may be DCI having the same size as DCI format 0_0, 0_1, 1_0, 1_1, or 2_X and including cyclic redundancy check (CRC) bits that are scrambled by an identifier for the SP-CSI reporting (SP-CSI-RNTI).

Note that "transmission of the user terminal 20" may be interpreted as, for example, "reception of the radio base station 10" in this specification.

If the control section 401 acquires a variety of information reported by the radio base station 10 from the received signal processing section 404, the control section 401 may update parameters to use for control, based on the information.

The transmission signal generation section 402 generates uplink signals (uplink control signals, uplink data signals, uplink reference signals and so on) based on commands from the control section 401, and outputs the uplink signals to the mapping section 403. The transmission signal generation section 402 can be constituted with a signal generator, a signal generation circuit or signal generation apparatus that can be described based on general understanding of the technical field to which the present disclosure pertains.

For example, the transmission signal generation section 402 generates an uplink control signal about transmission confirmation information, the channel state information (CSI), and so on, based on commands from the control section 401. The transmission signal generation section 402 generates uplink data signals, based on commands from the control section 401. For example, when a UL grant is included in a downlink control signal that is reported from the radio base station 10, the control section 401 commands the transmission signal generation section 402 to generate the uplink data signal.

The mapping section 403 maps the uplink signals generated in the transmission signal generation section 402 to radio resources, based on commands from the control section 401, and outputs the result to the transmitting/receiving sections 203. The mapping section 403 can be constituted with a mapper, a mapping circuit or mapping apparatus that can be described based on general understanding of the technical field to which the present disclosure pertains.

The received signal processing section 404 performs receiving processes (for example, demapping, demodulation, decoding and so on) of received signals that are input from the transmitting/receiving sections 203. Here, the received signals are, for example, downlink signals transmitted from the radio base station 10 (downlink control signals, downlink data signals, downlink reference signals and so on). The received signal processing section 404 can be constituted with a signal processor, a signal processing circuit or signal processing apparatus that can be described based on general understanding of the technical field to which the present disclosure pertains. The received signal processing section 404 can constitute the receiving section according to the present disclosure.

The received signal processing section 404 outputs the decoded information acquired through the receiving processes to the control section 401. The received signal processing section 404 outputs, for example, broadcast information, system information, RRC signaling, DCI and so on, to the control section 401. The received signal processing section 404 outputs the received signals and/or the signals after the receiving processes to the measurement section 405.

The measurement section 405 conducts measurements with respect to the received signals. The measurement section 405 can be constituted with a measurer, a measurement circuit or measurement apparatus that can be described based on general understanding of the technical field to which the present disclosure pertains.

For example, the measurement section 405 may perform RRM measurement, CSI measurement, and so on, based on the received signal. The measurement section 405 may measure a received power (for example, RSRP), a received quality (for example, RSRQ, SINR, SNR), a signal strength (for example, RSSI), channel information (for example, CSI), and so on. The measurement results may be output to the control section 401.

### (Hardware Structure)

Note that the block diagrams that have been used to describe the above embodiments show blocks in functional units. These functional blocks (components) may be implemented in arbitrary combinations of hardware and/or software. Also, the method for implementing each functional block is not particularly limited. That is, each functional block may be realized by one piece of apparatus that is physically and/or logically aggregated, or may be realized by directly and/or indirectly connecting two or more physically and/or logically separate pieces of apparatus (via wire and/or wireless, for example) and using these plurality of pieces of apparatus.

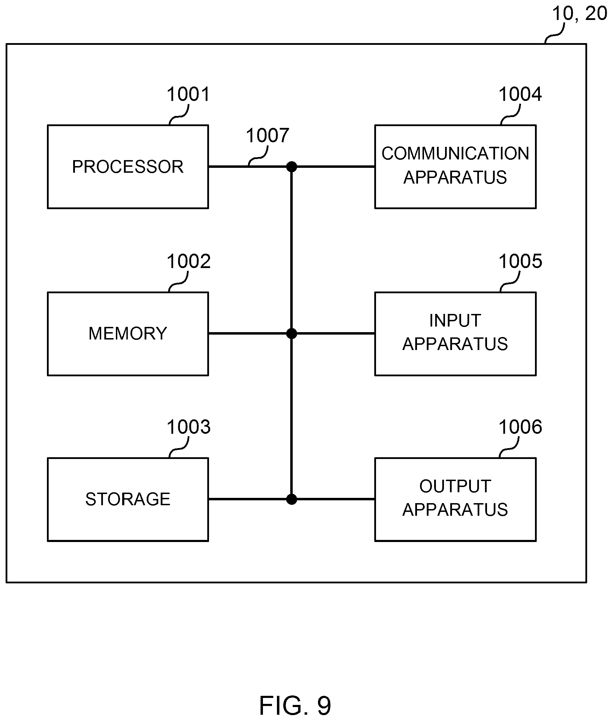

For example, a radio base station, a user terminal, and so on according to one embodiment of the present disclosure may function as a computer that executes the processes of the radio communication method of the present disclosure. FIG. 9 is a diagram to show an example of a hardware structure of the radio base station and the user terminal according to one embodiment. Physically, the above-described radio base station 10 and user terminals 20 may each be formed as computer apparatus that includes a processor 1001, a memory 1002, a storage 1003, a communication apparatus 1004, an input apparatus 1005, an output apparatus 1006, a bus 1007, and so on.

Note that, in the following description, the word "apparatus" may be interpreted as "circuit," "device," "unit," and so on. The hardware structure of the radio base station 10 and the user terminals 20 may be designed to include one or a plurality of apparatuses shown in the drawings, or may be designed not to include part of pieces of apparatus.

For example, although only one processor 1001 is shown, a plurality of processors may be provided. Furthermore, processes may be implemented with one processor or may be implemented at the same time, in sequence, or in different manners with one or more processors. Note that the processor 1001 may be implemented with one or more chips.

Each function of the radio base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and read and/or write data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described baseband signal processing section 104 (204), call processing section 105, and so on may be implemented by the processor 1001.

Furthermore, the processor 1001 reads programs (program codes), software modules, data, and so on from the storage 1003 and/or the communication apparatus 1004, into the memory 1002, and executes various processes according to these. As for the programs, programs to allow computers to execute at least part of the operations of the above-described embodiments are used. For example, the control section 401 of each user terminal 20 may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and/or the like for implementing a radio communication method according to one embodiment.

The storage 1003 is a computer-readable recording medium, and may be constituted with, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via wired and/or wireless networks, and may be referred to as, for example, a "network device," a "network controller," a "network card," a "communication module" and so on. The communication apparatus 1004 may be configured to include a high frequency switch, a duplexer, a filter, a frequency synthesizer, and so on in order to realize, for example, frequency division duplex (FDD) and/or time division duplex (TDD). For example, the above-described transmitting/receiving antennas 101 (201), amplifying sections 102 (202), transmitting/receiving sections 103 (203), communication path interface 106, and so on may be implemented by the communication apparatus 1004.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the radio base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology used in this specification and/or the terminology that is needed to understand this specification may be replaced by other terms that convey the same or similar meanings. For example, "channels" and/or "symbols" may be replaced by "signals" ("signaling"). Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

Furthermore, a radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may have a fixed time length (for example, 1 ms) independent of numerology.

Furthermore, a slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology. A slot may include a plurality of mini-slots. Each mini-slot may be constituted of one or a plurality of symbols in the time domain. A mini-slot may be referred to as a "sub-slot."

A radio frame, a subframe, a slot, a mini-slot, and a symbol all express time units in signal communication. A radio frame, a subframe, a slot, a mini-slot, and a symbol may each be called by other applicable terms. For example, one subframe may be referred to as a "transmission time interval (TTI)," a plurality of consecutive subframes may be referred to as a "TTI" or one slot or one mini-slot may be referred to as a "TTI." That is, a subframe and/or a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a radio base station schedules the allocation of radio resources (such as a frequency bandwidth and transmission power that are available for each user terminal) for the user terminal in TTI units. Note that the definition of TTIs is not limited to this.

TTIs may be transmission time units for channel-encoded data packets (transport blocks), code blocks, and/or codewords, or may be the unit of processing in scheduling, link adaptation, and so on. Note that, when TTIs are given, the time interval (for example, the number of symbols) to which transport blocks, code blocks and/or codewords are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe" and so on. A TTI that is shorter than a normal TTI may be referred to as a "shortened TTI," a "short TTI," a "partial or fractional TTI," a "shortened subframe," a "short subframe," a "mini-slot," a "sub-slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. Also, an RB may include one or a plurality of symbols in the time domain, and may be one slot, one mini-slot, one subframe, or one TTI in length. One TTI and one subframe each may be constituted of one or a plurality of resource blocks. Note that one or a plurality of RBs may be referred to as a "physical resource block (PRB (Physical RB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in this specification may be represented in absolute values or in relative values with respect to given values, or may be represented in another corresponding information. For example, radio resources may be specified by given indices.

The names used for parameters and so on in this specification are in no respect limiting. For example, since various channels (Physical Uplink Control Channel (PUCCH), Physical Downlink Control Channel (PDCCH), and so on) and information elements can be identified by any suitable names, the various names assigned to these individual channels and information elements are in no respect limiting.

The information, signals, and/or others described in this specification may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output from higher layers to lower layers and/or from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in this specification, and other methods may be used as well. For example, reporting of information may be implemented by using physical layer signaling (for example, downlink control information (DCI), uplink control information (UCI), higher layer signaling (for example, Radio Resource Control (RRC)signaling, broadcast information (master information block (MIB), system information blocks (SIBs), and so on), Medium Access Control (MAC) signaling and so on), and other signals and/or combinations of these.

Note that physical layer signaling may be referred to as "L1/L2 (Layer 1/Layer 2) control information (L1/L2 control signals)," "L1 control information (L1 control signal)," and so on. Also, RRC signaling may be referred to as an "RRC message," and can be, for example, an RRC connection setup (RRCConnectionSetup) message, an RRC connection reconfiguration (RRCConnectionReconfiguration) message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using wired technologies (coaxial cables, optical fiber cables, twisted-pair cables, digital subscriber lines (DSL), and so on) and/or wireless technologies (infrared radiation, microwaves, and so on), these wired technologies and/or wireless technologies are also included in the definition of communication media.

The terms "system" and "network" as used in this specification are used interchangeably.

In the present specification, the terms "base station (BS)," "radio base station," "eNB," "gNB," "cell," "sector," "cell group," "carrier," and "component carrier" may be used interchangeably. A base station may be referred to as a "fixed station," "NodeB," "eNodeB (eNB)," "access point," "transmission point," "receiving point," "femto cell," "small cell" and so on.

A base station can accommodate one or a plurality of (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of a base station and/or a base station subsystem that provides communication services within this coverage.

In the present specification, the terms "mobile station (MS)," "user terminal," "user equipment (UE)," and "terminal" may be used interchangeably.

A mobile station may be referred to as, by a person skilled in the art, a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

Furthermore, the radio base stations in this specification may be interpreted as user terminals. For example, each aspect/embodiment of the present disclosure may be applied to a configuration in which communication between a radio base station and a user terminal is replaced with communication among a plurality of user terminals (D2D (Device-to-Device)). In this case, the user terminals 20 may have the functions of the radio base stations 10 described above. In addition, wording such as "uplink" and "downlink" may be interpreted as "side." For example, an uplink channel may be interpreted as a side channel.

Likewise, the user terminals in this specification may be interpreted as radio base stations. In this case, the radio base stations 10 may have the functions of the user terminals 20 described above.

Actions which have been described in this specification to be performed by a base station may, in some cases, be performed by upper nodes. In a network including one or a plurality of network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

The aspects/embodiments illustrated in this specification may be used individually or in combinations, which may be switched depending on the mode of implementation. The order of processes, sequences, flowcharts, and so on that have been used to describe the aspects/embodiments herein may be re-ordered as long as inconsistencies do not arise. For example, although various methods have been illustrated in this specification with various components of steps in exemplary orders, the specific orders that are illustrated herein are by no means limiting.

The aspects/embodiments illustrated in this specification may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-RAT (Radio Access Technology), New Radio (NR), New radio access (NX), Future generation radio access (FX), GSM (registered trademark) (Global System for Mobile communications), CDMA 2000, Ultra Mobile Broadband (UMB), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate radio communication methods and/or next-generation systems that are enhanced based on these.

The phrase "based on" (or "on the basis of") as used in this specification does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second" and so on as used herein does not generally limit the quantity or order of these elements. These designations may be used herein only for convenience, as a method for distinguishing between two or more elements. Thus, reference to the first and second elements does not imply that only two elements may be employed, or that the first element must precede the second element in some way.

The term "judging (determining)" as used herein may encompass a wide variety of actions. For example, "judging (determining)" may be interpreted to mean making "judgments (determinations)" about calculating, computing, processing, deriving, investigating, looking up (for example, searching a table, a database, or some other data structures), ascertaining, and so on. Furthermore, "judging (determining)" may be interpreted to mean making "judgments (determinations)" about receiving (for example, receiving information), transmitting (for example, transmitting information), input, output, accessing (for example, accessing data in a memory), and so on. In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

The terms "connected" and "coupled," or any variation of these terms as used herein mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In this specification, when two elements are connected, the two elements may be considered "connected" or "coupled" to each other by using one or more electrical wires, cables and/or printed electrical connections, and, as some non-limiting and non-inclusive examples, by using electromagnetic energy having wavelengths in radio frequency regions, microwave regions, (both visible and invisible) optical regions, or the like.

In this specification, the phrase "A and B are different" may mean that "A and B are different from each other." The terms "separate," "be coupled" and so on may be interpreted similarly.

When terms such as "including," "comprising," and variations of these are used in this specification or in claims, these terms are intended to be inclusive, in a manner similar to the way the term "provide" is used. Furthermore, the term "or" as used in this specification or in claims is intended to be not an exclusive disjunction.

Now, although the invention according to the present disclosure has been described in detail above, it should be obvious to a person skilled in the art that the invention according to the present disclosure is by no means limited to the embodiments described in this specification. The invention according to the present disclosure can be implemented with various corrections and in various modifications, without departing from the spirit and scope of the invention defined by the recitations of claims. Consequently, the description in this specification is provided only for the purpose of explaining examples, and should by no means be construed to limit the invention according to the present disclosure in any way.

## Claims

1. A user terminal comprising:
a receiving section that receives downlink control information (DCI) for indicating activation or deactivation of semi-persistent channel state information (SP-CSI) reporting; and
a control section that determines a configuration of the SP-CSI reporting, based on a format of the downlink control information.

2. The user terminal according to claim 1, wherein
the control section determines the configuration of the SP-CSI reporting, based on a CSI request field included in the downlink control information.

3. The user terminal according to claim 1, wherein
the control section determines the configuration of the SP-CSI reporting, based on a configuration of SP-CSI reporting associated with the format of the downlink control information.

4. The user terminal according to claim 1, wherein,
in a case that the downlink control information does not include a CSI request field, the control section judges a bit string included in another one or a plurality of fields, as the CSI request field and determines the configuration of the SP-CSI reporting, based on this CSI request field.

5. The user terminal according to claim 3 or 4, wherein
the downlink control information has the same size as DCI format 0_0 and includes cyclic redundancy check bits scrambled by an identifier for the SP-CSI reporting.

6. A radio communication method of a user terminal, the radio communication method comprising:
receiving downlink control information (DCI) for indicating activation or deactivation of semi-persistent channel state information (SP-CSI) reporting; and
determining a configuration of the SP-CSI reporting based on a format of the downlink control information.
